# EUROPEAN PATENT APPLICATION

(11) **EP 4 338 620 A1**
(43) Date of publication of application: **20.03.2024**
(21) Application number: 21948261.9
(22) Date of filing: 28.06.2021
(51) Int. Cl.: A24F 40/46

(54) **AEROSOL GENERATION SYSTEM**

(71) Applicant: Japan Tobacco, Inc., Tokyo, 105-6927 (JP)
(72) Inventor: YAMADA, Manabu, Tokyo 130-8603 (JP); INOUE, Yasunobu, Tokyo 130-8603 (JP)
(74) Representative: Hoffmann Eitle
(86) International application number: PCT/JP2021/024407
(87) International publication number: WO 2023/275949

(57) **Abstract**

[Problem] To provide a structure that can prevent a heating unit from breaking.

[Solution] An aerosol generation system comprising a power supply unit that supplies power, and a heating unit that heats a base material containing an aerosol source. The heating unit is inserted in the base material and includes an electrical resistor that generates heat by using the power supplied from the power supply unit, a rigid body, and an electrical insulator disposed between the electrical resistor and the rigid body.

## Description

### Technical Field

The present invention relates to aerosol generation systems.

### Background Art

Inhaler devices including electronic cigarettes and nebulizers that generate material to be inhaled by users are becoming widely popular. For example, an inhaler device uses a substrate, which contains an aerosol source for generating an aerosol and a flavor source for imparting a flavor component to the generated aerosol, so as to generate a flavor-component-imparted aerosol. A user can taste the flavor by inhaling the flavor-component-imparted aerosol generated by the inhaler device. The act of the user inhaling the aerosol may also be referred to as "puff' or "puff action" hereinafter.

In recent years, inhaler devices of a type that uses stick-shaped substrates are becoming widely popular, and technologies related to inhaler devices of this type are being actively developed. For example, Patent Literature 1 indicated below discloses a technology in which, when the stick-shaped substrate is inserted into the inhaler device, a blade-shaped heater is inserted into the substrate to heat the substrate from the inside.

### Citation List

### Patent Literature

Patent Literature 1: JP 5854394 B2

### Summary of Invention

### Technical Problem

However, the inhaler device that uses the blade-shaped heater is problematic in that the heater breaks easily.

The present invention has been made in view of the above problem, and an object of the present invention is to provide a mechanism that can prevent the heater from breaking.

### Solution to Problem

In order to solve the above problem, an aspect of the present invention provides an aerosol generation system including: a power supply unit that supplies electric power; and a heater that heats a substrate containing an aerosol source. The heater includes an electric resistor, a rigid body, and an electric insulator disposed between the electric resistor and the rigid body, and is inserted into the substrate. The electric resistor produces heat in accordance with the electric power supplied from the power supply unit.

The heater may include two electric insulators, and the electric resistor may be sandwiched between the two electric insulators.

The heater may include two rigid bodies, and the electric resistor and the electric insulators may be sandwiched between the two rigid bodies.

In a portion of the heater inserted into the substrate, the electric resistor may be within a region sandwiched between the two electric insulators, and the two electric insulators may be within a region sandwiched between the two rigid bodies.

In the portion of the heater inserted into the substrate, ends of the two rigid bodies not in contact with the electric insulators may be joined to each other.

The heater may be formed by performing hot-pressing on the electric resistor, the electric insulator, and the rigid body.

An end of the electric insulator located toward a trailing end of the heater may be disposed further toward the trailing end of the heater relative to an end of the rigid body located toward the trailing end of the heater.

The heater may be inserted into the substrate from a leading end of the heater, and the leading end of the heater may be sharp.

The electric resistor may have a heating area disposed toward a leading end of the heater and a non-heating area disposed toward a trailing end of the heater. The heating area is an area where a calorific value per unit area is larger than or equal to a predetermined value. The non-heating area is an area where the calorific value per unit area is smaller than the predetermined value. A boundary between the heating area and the non-heating area may be disposed further toward the trailing end of the heater relative to an end of the rigid body located toward the trailing end of the heater.

The electric resistor may have a heating area disposed toward a leading end of the heater and a non-heating area disposed toward a trailing end of the heater. The heating area may be an area where a calorific value per unit area is larger than or equal to a predetermined value. The non-heating area may be an area where the calorific value per unit area is smaller than the predetermined value. A boundary between the heating area and the non-heating area may be disposed at a position identical to a position of an end of the rigid body located toward the trailing end of the heater.

The heater may produce heat non-uniformly in a direction extending from a leading end toward a trailing end of the heater.

The electric resistor may be distributed non-uniformly in the direction extending from the leading end toward the trailing end of the heater.

The rigid body may be formed of a metal plate.

The rigid body may be formed of an SUS metal plate.

The electric insulator may be composed of polyimide.

The electric insulator may have a film-like configuration.

The electric resistor may be composed of SUS.

The aerosol generation system may further include: a container that has an internal space and an opening through which the internal space communicates with an outside, and that accommodates the substrate inserted into the internal space through the opening; and a holder that holds the rigid body such that a leading end of the heater protrudes in a direction extending from a bottom of the container toward the opening.

The holder may hold the rigid body while being separated from the electric insulator.

The aerosol generation system may include the substrate.

### Advantageous Effects of Invention

According to the present invention described above, a mechanism that can prevent the heater from breaking is provided.

### Brief Description of Drawings

[FIG. 1] FIG. 1 is a schematic diagram schematically illustrating a configuration example of an inhaler device.
[FIG. 2] FIG. 2 is a perspective view of a heater according to an embodiment.
[FIG. 3] FIG. 3 is an exploded perspective view of the heater according to this embodiment.
[FIG. 4] FIG. 4 is a front view of the heater according to this embodiment.
[FIG. 5] FIG. 5 is a side view of the heater according to this embodiment.
[FIG. 6] FIG. 6 is a transparent perspective view of a part where the heater is disposed in the inhaler device according to this embodiment.
[FIG. 7] FIG. 7 is a cross-sectional view of the part where the heater is disposed in the inhaler device according to this embodiment, taken along line A-A.

### Description of Embodiments

A preferred embodiment of the present invention will be described in detail below with reference to the appended drawings. In this description and the drawings, structural elements having substantially identical functional configurations will be given the same reference signs, and redundant descriptions thereof will be omitted.

### 1. Configuration example of inhaler device

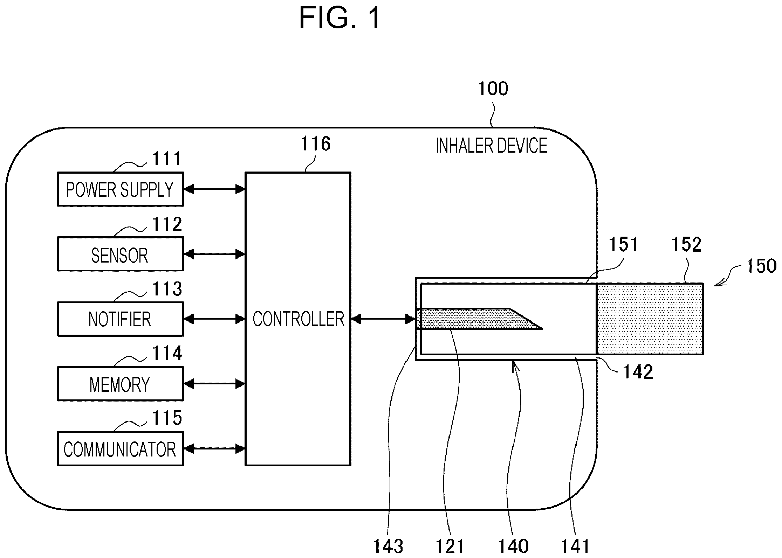

An inhaler device according to this configuration example generates an aerosol by heating a substrate containing an aerosol source from inside the substrate. A present configuration example will be described below with reference to FIG. 1.

FIG. 1 is a schematic diagram schematically illustrating a configuration example of the inhaler device. As illustrated in FIG. 1, an inhaler device 100 according to this configuration example includes a power supply 111, a sensor 112, a notifier 113, a memory 114, a communicator 115, a controller 116, a heater 121, and a container 140. Inhalation is performed by a user in a state where a stick substrate 150 is accommodated in the container 140. Each structural element will be sequentially described below.

The power supply 111 stores electric power. The power supply 111 supplies the electric power to the structural elements of the inhaler device 100. For example, the power supply 111 may be a rechargeable battery, such as a lithium ion secondary battery. The power supply 111 may be recharged by being connected to an external power supply by, for example, a USB (universal serial bus) cable. Alternatively, the power supply 111 may be recharged in a non-connected state with a power-transmitting device by wireless power transmission technology. As another alternative, the power supply 111 alone may be removable from the inhaler device 100 so as to be replaceable with a new power supply 111.

The sensor 112 detects various types of information regarding the inhaler device 100. The sensor 112 then outputs the detected information to the controller 116. In an example, the sensor 112 may be a pressure sensor such as a microphone condenser, a flow sensor, or a temperature sensor. When detecting a numerical value generated in accordance with the user's inhalation, the sensor 112 outputs information indicating that the inhalation has been performed by the user to the controller 116. In another example, the sensor 112 is an input device, such as a button or a switch, receiving information input by the user. In particular, the sensor 112 may include a command button for starting/stopping aerosol generation. The sensor 112 then outputs the information input by the user to the controller 116. In another example, the sensor 112 is a temperature sensor that detects the temperature of the heater 121. For example, the temperature sensor detects the temperature of the heater 121 based on an electric resistance value of a conductive track of the heater 121. The sensor 112 may detect the temperature of the stick substrate 150 accommodated in the container 140 based on the temperature of the heater 121.

The notifier 113 notifies the user of information. In an example, the notifier 113 is a light-emitting device, such as an LED (light-emitting diode). In that case, for example, when the power supply 111 needs to be recharged, when the power supply 111 is being recharged, and when an abnormality has occurred in the inhaler device 100, the notifier 113 emits light in different patterns of light, respectively. Each pattern of light is a concept involving colors and on/off timings. Together with or in place of the light-emitting device, the notifier 113 may be, for example, a display device that displays an image, a sound output device that outputs sound, and a vibration device that vibrates. The notifier 113 may also provide notification information indicating that inhalation by the user is possible. The notification information indicating that inhalation by the user is possible is provided when the temperature of the stick substrate 150 heated by the heater 121 reaches a predetermined temperature.

The memory 114 stores various types of information for operation of the inhaler device 100. The memory 114 is, for example, a non-volatile storage medium, such as a flash memory. An example of the information stored in the memory 114 is information regarding the OS (operating system) of the inhaler device 100, such as the control contents of the various types of structural elements controlled by the controller 116. Another example of the information stored in the memory 114 is information regarding inhalation by the user, such as the number of times of inhalation, the inhalation time, and the accumulated inhalation time period.

The communicator 115 is a communication interface for exchanging information between the inhaler device 100 and another device. The communicator 115 performs communication in conformity with any wired or wireless communication standard. Such a communication standard may be, for example, a wireless LAN (local area network), a wired LAN, Wi-Fi (registered trademark), or Bluetooth (registered trademark). In an example, the communicator 115 transmits the information regarding the inhalation by the user to a smartphone to cause the smartphone to display the information regarding the inhalation by the user. In another example, the communicator 115 receives information about a new OS from a server to update the information about the OS stored in the memory 114.

The controller 116 functions as an arithmetic processing unit and a control device, and controls the overall operation in the inhaler device 100 in accordance with various programs. For example, the controller 116 is implemented by an electronic circuit, such as a CPU (central processing unit) and a microprocessor. Furthermore, the controller 116 may include a ROM (read only memory) that stores a program and arithmetic parameter to be used, and a RAM (random access memory) that temporarily stores an appropriately changing parameter. The inhaler device 100 executes various processes based on control by the controller 116. Examples of the processes controlled by the controller 116 include supplying of electric power from the power supply 111 to the other structural elements, recharging of the power supply 111, detection of information by the sensor 112, notification of information by the notifier 113, storing and reading of information by the memory 114, and exchanging of information by the communicator 115. Other processes executed by the inhaler device 100, such as input of information to each structural element and a process based on information output from each structural element, are also controlled by the controller 116.

The container 140 has an internal space 141 and holds the stick substrate 150 while accommodating a portion of the stick substrate 150 within the internal space 141. The container 140 has an opening 142 through which the internal space 141 communicates with the outside, and holds the stick substrate 150 inserted in the internal space 141 through the opening 142. For example, the container 140 is a tubular body having the opening 142 and a bottom 143 as a bottom surface, and defines the internal space 141 that is pillar-shaped. The container 140 has an inside diameter smaller than an outside diameter of the stick substrate 150 in at least a portion of the tubular body in the height direction, and may hold the stick substrate 150 while applying pressure around the stick substrate 150 inserted in the internal space 141. The container 140 also has a function for defining a flow path for air traveling through the stick substrate 150. An air inlet serving as an inlet for the air entering the flow path is disposed in, for example, the bottom 143. On the other hand, an air outlet serving as an outlet for the air exiting from the flow path is the opening 142.

The stick substrate 150 is a stick-shaped member. The stick substrate 150 includes a substrate 151 and an inhalation port 152.

The substrate 151 contains an aerosol source. The aerosol source atomizes by being heated, so that an aerosol is generated. The aerosol source may be, for example, a product derived from tobacco, such as a product obtained by forming shredded tobacco or tobacco raw material into a granular form, a sheet form, or a powder form. The aerosol source may include a product not derived from tobacco and made from a plant (such as mint or herb) other than tobacco. In an example, the aerosol source may contain a flavor component, such as menthol. If the inhaler device 100 is a medical inhaler, the aerosol source may contain a medicine to be inhaled by a patient. The aerosol source is not limited to a solid and may be a liquid, such as polyhydric alcohol including glycerine and propylene glycol, or water. At least a portion of the substrate 151 is accommodated in the internal space 141 of the container 140 in the state where the stick substrate 150 is held by the container 140.

The inhalation port 152 is a member to be held in the user's mouth during inhalation. At least a portion of the inhalation port 152 protrudes from the opening 142 in the state where the stick substrate 150 is held by the container 140. When the user holds the inhalation port 152 protruding from the opening 142 in the user's mouth and inhales, air flows into the container 140 through the air inlet (not illustrated). The air flowing in travels through the internal space 141 of the container 140, that is, through the substrate 151, and reaches the inside of the user's mouth together with the aerosol generated from the substrate 151.

The heater 121 heats the aerosol source so as to atomize the aerosol source and generate the aerosol. The heater 121 is composed of any material, such as metal or polyimide. For example, the heater 121 is blade-shaped and is disposed to protrude from the bottom 143 of the container 140 to the internal space 141 of the container 140. Therefore, when the stick substrate 150 is inserted into the container 140, the blade-shaped heater 121 is inserted into the stick substrate 150 to pierce the substrate 151 of the stick substrate 150. When the heater 121 produces heat, the aerosol source contained in the stick substrate 150 atomizes by being heated from inside the stick substrate 150, whereby the aerosol is generated. The heater 121 produces heat when supplied with electric power from the power supply 111. In an example, when the sensor 112 detects that a predetermined user input has been performed, electric power may be supplied so that the aerosol is generated. When the temperature of the stick substrate 150 heated by the heater 121 reaches the predetermined temperature, inhalation by the user becomes possible. Subsequently, when the sensor 112 detects that a predetermined user input has been performed, the supply of electric power may be stopped. In another example, in a time period in which the sensor 112 detects that the inhalation has been performed by the user, electric power may be supplied so that the aerosol is generated.

The power supply 111 is an example of a power supply unit that supplies electric power. The stick substrate 150 is an example of a substrate containing the aerosol source.

The inhaler device 100 and the stick substrate 150 work in cooperation with each other to generate the aerosol to be inhaled by the user. Therefore, the combination of the inhaler device 100 and the stick substrate 150 may be regarded as an aerosol generation system.

### 2. Detailed configuration of heater

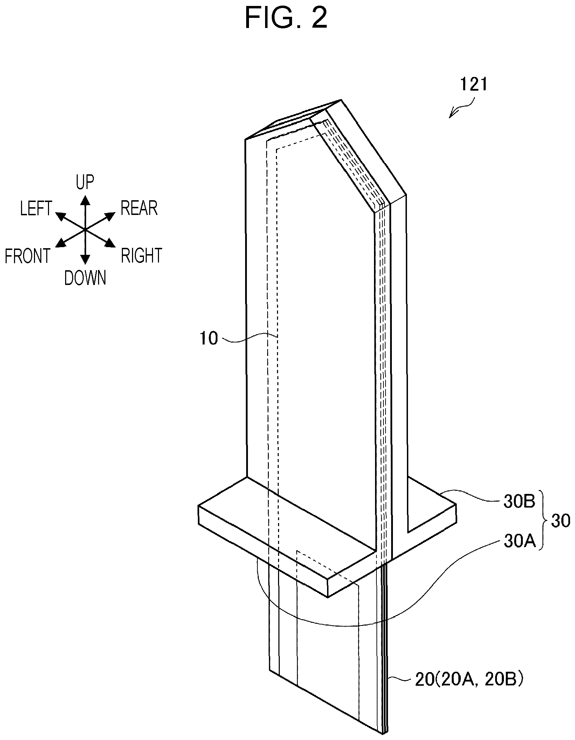

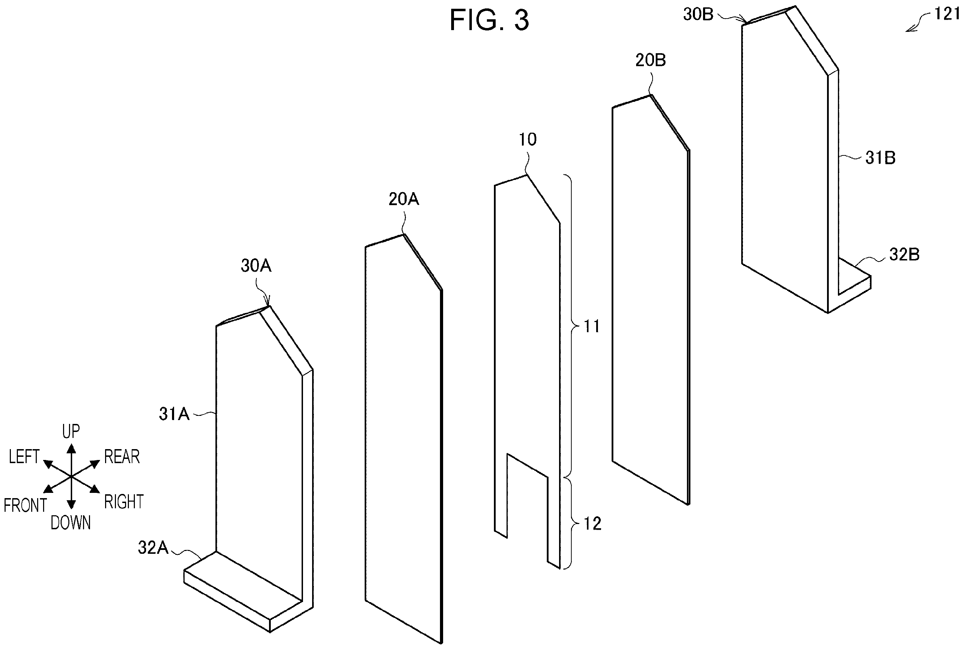

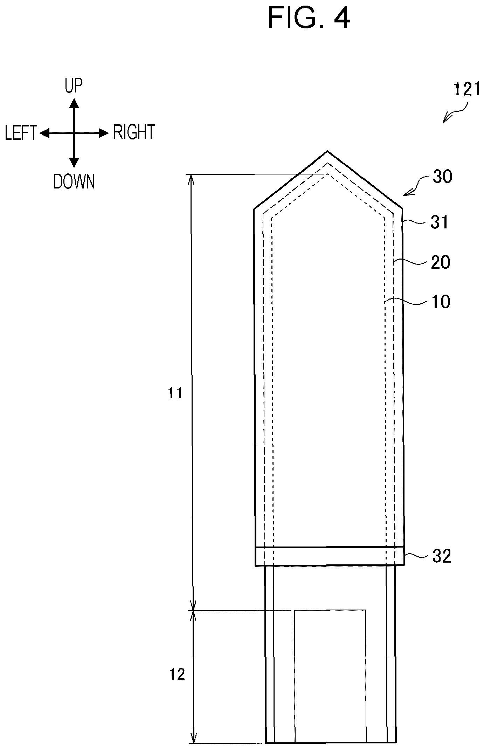

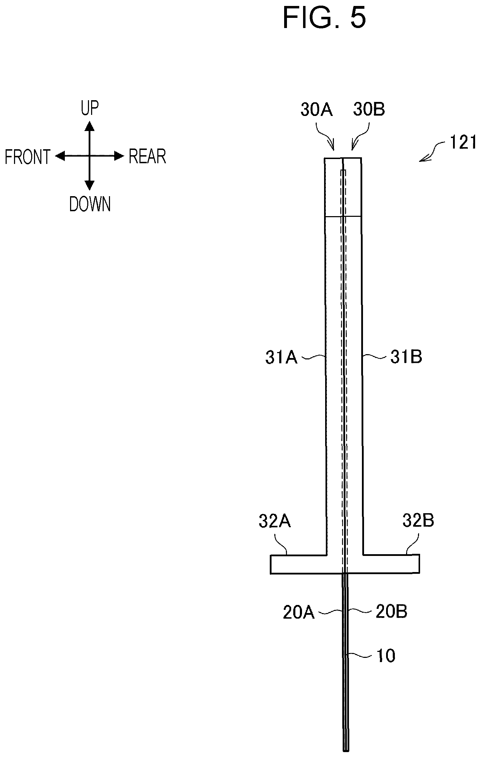

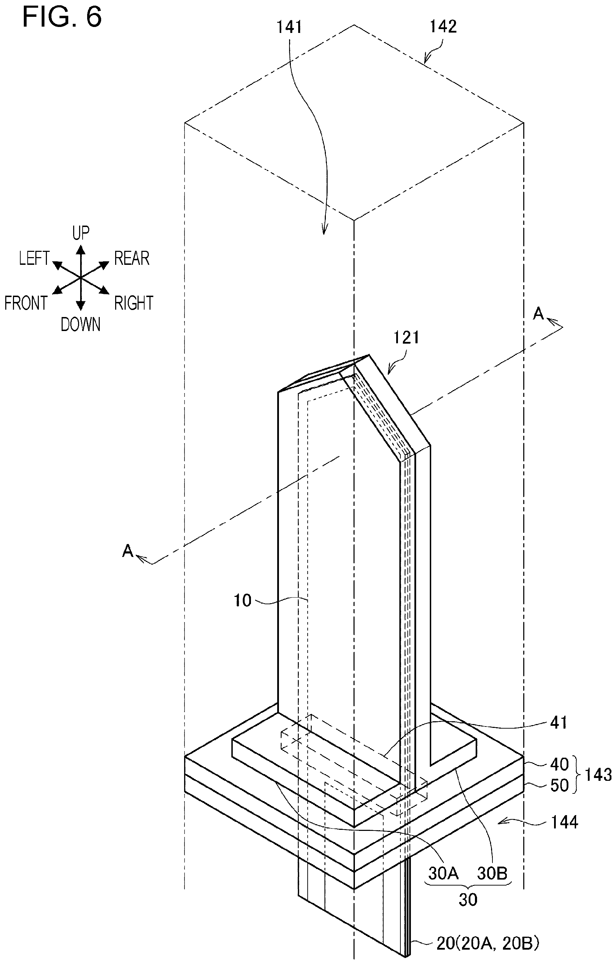

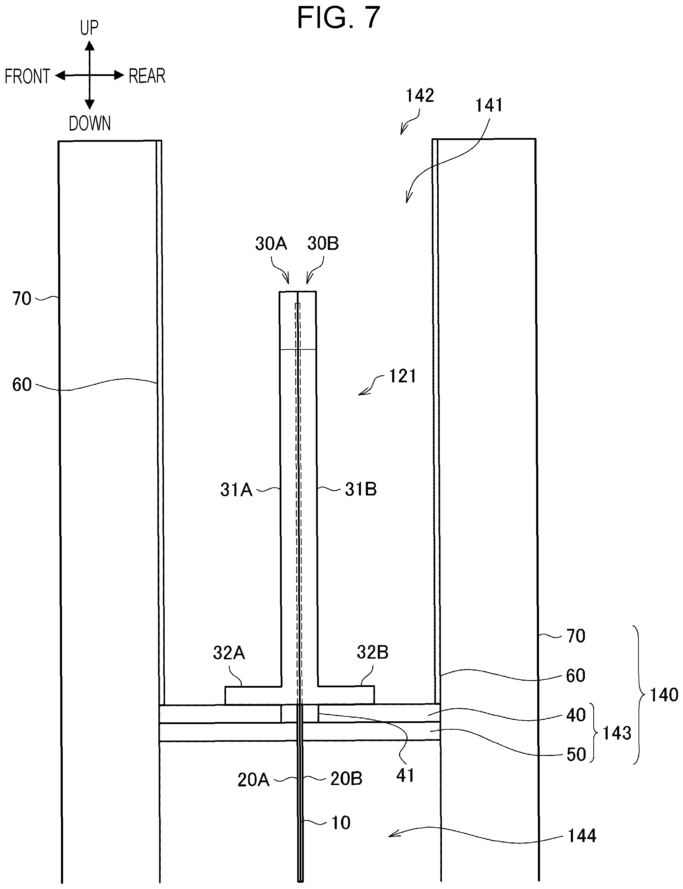

FIG. 2 is a perspective view of the heater 121 according to this embodiment. FIG. 3 is an exploded perspective view of the heater 121 according to this embodiment. FIG. 4 is a front view of the heater 121 according to this embodiment. FIG. 5 is a side view of the heater 121 according to this embodiment. FIG. 6 is a transparent perspective view of a part where the heater 121 is disposed in the inhaler device 100 according to this embodiment. FIG. 7 is a cross-sectional view of the part where the heater 121 is disposed in the inhaler device 100 according to this embodiment, taken along line A-A.

As illustrated in FIG. 2 to FIG. 5, the heater 121 has an electric resistor 10, electric insulators 20 (20A and 20B), and rigid bodies 30 (30A and 30B). As illustrated in FIG. 6 and FIG. 7, the heater 121 is disposed to protrude into the internal space 141 of the container 140.

In this description and the drawings, elements having substantially identical functional configurations may sometimes be differentiated from each other by adding a different alphabet to the suffix of the same reference sign. For example, a plurality of elements having substantially identical functional configurations are differentiated from each other as in rigid bodies 30A and 30B, where necessary. However, if it is not necessary to particularly differentiate a plurality of elements having substantially identical functional configurations from each other, the same reference sign is given. For example, if the rigid bodies 30A and 30B do not particularly need to be differentiated from each other, they will simply be referred to as "rigid bodies 30".

In these drawings, a direction in which the stick substrate 150 is inserted toward the heater 121 may also be referred to as "down direction". A direction in which the stick substrate 150 is removed from the heater 121 may also be referred to as "up direction". With regard to the heater 121, an end in the up direction may also be referred to as "leading end", whereas an end in the down direction may also be referred to as "trailing end". The up-down direction corresponds to the longitudinal direction of the electric resistor 10, the electric insulators 20, and the rigid bodies 30 (i.e., first portions 31). Furthermore, the up-down direction corresponds to the longitudinal direction of the heater 121.

A direction in which the electric resistor 10, the electric insulators 20, and the rigid bodies 30 overlap one another may also be referred to as "front-rear direction". The front-rear direction corresponds to the thickness direction of the electric resistor 10, the electric insulators 20, and the rigid bodies 30 (i.e., the first portions 31). Furthermore, the front-rear direction corresponds to the thickness direction of the heater 121.

A direction orthogonal to the up-down direction and the front-rear direction may also be referred to as "left-right direction". The left-right direction corresponds to the lateral direction of the electric resistor 10, the electric insulators 20, and the rigid bodies 30. Furthermore, the left-right direction corresponds to the lateral direction of the heater 121.

The structural elements related to the heater 121 will be described in detail below.

The electric resistor 10 produces heat in accordance with electric power supplied from the power supply 111. The electric resistor 10 produces Joule heat when electric current flows therethrough. In an example, the electric resistor 10 is formed of a thin flatly-routed conductive wire. The electric resistor 10 is composed of, for example, SUS (steel use stainless). With this configuration, the electric resistor 10 can exhibit high heat resisting properties.

As illustrated in FIG. 3, the electric resistor 10 is sandwiched between two electric insulators 20 (20A and 20B). Therefore, a situation where the electric resistor 10 short-circuits as a result of accidentally coming into contact with another conductor can be prevented. The two electric insulators 20 have the same shape.

Each electric insulator 20 is an electrically insulative member. Each electric insulator 20 is composed of any electrically insulative material. For example, each electric insulator 20 is composed of polyimide. With this configuration, each electric insulator 20 can exhibit high heat resisting properties.

As illustrated in FIG. 3, each electric insulator 20 is disposed between the electric resistor 10 and the corresponding rigid body 30. Therefore, a situation where a short-circuit occurs as a result of the electric resistor 10 and the rigid body 30 coming into contact with each other can be prevented.

As illustrated in FIG. 4, an end of each electric insulator 20 located toward the trailing end (i.e., lower side) of the heater 121 is disposed further toward the trailing end (i.e., lower side) of the heater 121 relative to an end of the corresponding rigid body 30 located toward the trailing end (i.e., lower side) of the heater 121. Specifically, the electric insulator 20 extends downward further than the rigid body 30. With this configuration, a situation where a short-circuit occurs as a result of the electric resistor 10 and the rigid body 30 coming into contact with each other can be prevented more reliably.

Each electric insulator 20 has a film-like configuration. The two film-like electric insulators 20 and the electric resistor 10 sandwiched between these two electric insulators 20 serve as a so-called film heater. For example, the film heater is formed by routing a conductive wire over a film surface while bending the conductive wire. Heat distribution in the film surface can be designed arbitrarily in accordance with the distribution (i.e., density) of the conductive wire over the film surface.

Each rigid body 30 is a member having predetermined rigidity. With this configuration, the rigid bodies 30 exhibit rigidity against a force applied to the heater 121, so as to prevent the heater 121 from buckling.

Each rigid body 30 is also a member having heat transmissibility. The rigid bodies 30 increase in temperature in accordance with heat transmitted from the electric resistor 10. Therefore, the heat produced by the electric resistor 10 is transmitted to the stick substrate 150 via the rigid bodies 30.

Each rigid body 30 is tabular. For example, each rigid body 30 is formed of a metal plate. In an example, each rigid body 30 is formed of an SUS metal plate. With this configuration, the rigid bodies 30 can exhibit high heat resisting properties.

As illustrated in FIG. 3, each rigid body 30 has a first portion 31 and a second portion 32. The first portion 31 is a portion of the rigid body 30 extending in the up-down direction (corresponding to a first direction). The second portion 32 is a portion extending in the front-rear direction (corresponding to a second direction) that is different from the direction of the first portion 31. Each rigid body 30 may be formed by bending a single metal plate. The second portion 32 is held by a holder 40 to be described later. With this configuration, the second portion 32 held by the holder 40 can exhibit high rigidity against a force applied in the front-direction direction to the first portion 31. Therefore, the rigid bodies 30 can prevent the heater 121 from buckling in the front-rear direction.

As illustrated in FIG. 3 and FIG. 5, each rigid body 30 may have an L-shape formed by the first portion 31 and the second portion 32. Specifically, an angle formed between the first portion 31 and the second portion 32 may be 90 degrees. With this configuration, the rigid bodies 30 can exhibit higher rigidity against a force applied in the front-rear direction. Therefore, the heater 121 can be further prevented from buckling in the front-rear direction.

The stick substrate 150 is inserted into the internal space 141 until the leading end of the stick substrate 150 comes into contact with the second portions 32. This causes a portion sandwiched between the first portions 31 of the heater 121 to be inserted into the stick substrate 150. Specifically, the first portions 31 serve as an outermost shell for the portion of the heater 121 to be inserted into the stick substrate 150.

As illustrated in FIG. 3, the electric resistor 10 and the electric insulators 20 are sandwiched between two rigid bodies 30 (30A and 30B). More specifically, the electric resistor 10 and the electric insulators 20 are sandwiched between the first portions 31 (31A and 31B) of the two rigid bodies 30. With this configuration, the heater 121 can be further prevented from buckling in the front-rear direction. The two rigid bodies 30 have the same shape.

In particular, as illustrated in FIG. 3 and FIG. 5, the two rigid bodies 30 are disposed such that the first portions 31 sandwich the electric resistor 10 and the electric insulators 20 and that the two second portions 32 are oriented in opposite directions from each other. To put it more simply, the electric resistor 10 and the electric insulators 20 are sandwiched between the first portions 31 of the two rigid bodies 30 disposed in a back-to-back fashion. With this configuration, the two rigid bodies 30 sandwich the electric resistor 10 and the electric insulators 20 to form a T-shape, so as to exhibit higher rigidity against a force applied in the front-rear direction. Therefore, the heater 121 can be further prevented from buckling.

As illustrated in FIG. 4, in the portion of the heater 121 to be inserted into the stick substrate 150, the electric resistor 10 is within a region sandwiched between the two electric insulators 20. Specifically, in the portion sandwiched between the two first portions 31 of the heater 121, the left and right ends of the electric resistor 10 are located within the left and right ends of the electric insulators 20. The upper end of the electric resistor 10 is located lower than the upper end of each electric insulator 20. Therefore, in the portion of the heater 121 to be inserted into the stick substrate 150, the two electric insulators 20 can sandwich the electric resistor 10 without exposing the electric resistor 10 to the outside.

As illustrated in FIG. 4, in the portion of the heater 121 to be inserted into the stick substrate 150, the two electric insulators 20 are within a region sandwiched between the two rigid bodies 30 (i.e., the first portions 31). Specifically, in the portion sandwiched between the two first portions 31 of the heater 121, the left and right ends of each electric insulator 20 are located inward of the left and right ends of the corresponding first portion 31. The upper end of the electric insulator 20 is located lower than the upper end of the first portion 31. Therefore, in the portion of the heater 121 to be inserted into the stick substrate 150, the first portions 31 of the two rigid bodies 30 can sandwich the electric insulators 20 without exposing the electric insulators 20 to the outside.

In the portion of the heater 121 to be inserted into the stick substrate 150, ends of the two rigid bodies 30 (i.e., the first portions 31) that are not in contact with the electric insulators 20 are joined to each other. Specifically, the upper ends and the left and right ends, which are not in contact with the electric insulators 20, of the first portions 31 of the two rigid bodies 30 are joined to each other without any gaps. Accordingly, as illustrated in FIG. 5, the electric resistor 10 and the electric insulators 20 sandwiched between the two rigid bodies 30 are shielded from the outside. Therefore, a problem, such as reduced heating efficiency due to foreign matter entering between the two rigid bodies 30, can be prevented.

The heater 121 may be formed by performing hot-pressing on the electric resistor 10, the electric insulators 20, and the rigid bodies 30. In particular, the heater 121 may be formed by performing hot-pressing on the electric resistor 10, the two electric insulators 20, and the first portions 31 of the two rigid bodies 30. With this configuration, the gap-less joining mentioned above can be realized, and the strength of the heater 121 can be increased.

The heater 121 is inserted into the stick substrate 150 from the leading end of the heater 121. The leading end of the heater 121 is sharp. Specifically, the upper end of each rigid body 30 is sharp. In this embodiment, as illustrated in FIG. 3, the leading ends of the first portions 31 have the same triangular shape and are joined to each other in a state where the apexes thereof are oriented upward. With this configuration, when the heater 121 is inserted into the stick substrate 150, the resistance that the heater 121 receives from the stick substrate 150 can be attenuated. Therefore, the heater 121 can be further prevented from buckling.

As illustrated in FIG. 3, the electric resistor 10 has a heating area 11 and a non-heating area 12. The heating area 11 is an area where a calorific value of the electric resistor 10 per unit area is larger than or equal to a predetermined value. The heating area 11 is disposed toward the leading end (i.e., upper side) of the heater 121. The non-heating area 12 is an area where the calorific value of the electric resistor 10 per unit area is smaller than the predetermined value. The non-heating area 12 is disposed toward the trailing end (i.e., lower side) of the heater 121. With this configuration, at least the heating area 11 can be inserted into the stick substrate 150. Therefore, the stick substrate 150 can be quickly increased in temperature.

As illustrated in FIG. 4, the boundary between the heating area 11 and the non-heating area 12 is disposed further toward the trailing end (i.e., lower side) of the heater 121 relative to the end of each rigid body 30 located toward the trailing end (i.e., lower side) of the heater 121. Specifically, the heating area 11 is disposed to protrude downward further than the rigid bodies 30. Accordingly, at least the portion of the heating area 11 in contact with the first portions 31 can directly heat the first portions 31. Moreover, the portion of the heating area 11 protruding downward further than the rigid bodies 30 can indirectly heat the second portions 32 and the holder 40. Accordingly, the stick substrate 150 can be heated efficiently.

As illustrated in FIG. 4, the end of each electric insulator 20 located toward the trailing end (i.e., lower side) of the heater 121 is disposed further toward the trailing end (i.e., lower side) of the heater 121 relative to the end of the corresponding rigid body 30 located toward the trailing end (i.e., lower side) of the heater 121. Specifically, the electric insulators 20 are disposed to protrude downward further than the rigid bodies 30. Accordingly, the electric insulators 20 can reliably insulate the electric resistor 10 and the rigid bodies 30 from each other.

The heater 121 may produce heat non-uniformly in the direction extending from the leading end toward the trailing end (i.e., up-down direction) of the heater 121. In an example, the heating area 11 and the non-heating area 12 of the electric resistor 10 may produce heat at different temperatures. In another example, in the heating area 11, a plurality of areas that produce heat at different temperatures may be distributed separately in the up-down direction. In particular, in a portion of the heating area 11 to be inserted into the stick substrate 150 (i.e., a portion of the electric resistor 10 sandwiched between the first portions 31), a plurality of areas that produce heat at different temperatures may be distributed separately in the up-down direction. With this configuration, the stick substrate 150 can be heated with an optimal temperature distribution.

The electric resistor 10 may be distributed non-uniformly in the direction extending from the leading end toward the trailing end (i.e., up-down direction) of the heater 121. In an example, the electric resistor 10 may be distributed non-uniformly between the heating area 11 and the non-heating area 12 of the electric resistor 10. In another example, in the heating area 11, a plurality of areas with different distributions of the electric resistor 10 may be distributed separately in the up-down direction. In particular, in the portion of the heating area 11 to be inserted into the stick substrate 150 (i.e., the portion of the electric resistor 10 sandwiched between the first portions 31), a plurality of areas with different distributions of the electric resistor 10 may be distributed separately in the up-down direction. With this configuration, the heater 121 can produce heat non-uniformly in the up-down direction.

As illustrated in FIG. 7, the container 140 has a holder 40, a sealer 50, an interior member 60, and an exterior member 70. The exterior member 70 is a tubular member. The exterior member 70 may serve as an outermost shell of the inhaler device 100. The interior member 60 serves as an inner wall (i.e., a sidewall) of the container 140. The holder 40 and the sealer 50 constitute the bottom 143 of the container 140.

The holder 40 holds the heater 121. As illustrated in FIG. 6 and FIG. 7, the holder 40 holds the heater 121 such that the leading end of the heater 121 protrudes in a direction extending from the bottom 143 of the container 140 toward the opening 142. With this configuration, when the stick substrate 150 is inserted into the internal space 141 through the opening 142, the leading end of the heater 121 pierces the stick substrate 150, so that the heater 121 can be inserted into the stick substrate 150.

The holder 40 is composed of a material having high heat resisting properties. For example, the holder 40 is composed of PEEK (polyether ether ketone). With this configuration, the heater 121 can be continuously held even when the heater 121 produces high heat.

As illustrated in FIG. 6 and FIG. 7, the holder 40 holds the second portions 32 of the rigid bodies 30. Specifically, the holder 40 is tabular. The upper surface of the holder 40 is joined to the lower surfaces of the second portions 32 of the rigid bodies 30, and side surfaces of the holder 40 are joined to inner surfaces of the exterior member 70.

As illustrated in FIG. 6 and FIG. 7, the holder 40 holds the rigid bodies 30 while being separated from the electric insulators 20. Specifically, a central portion of the tabular holder 40 is provided with a hole 41. The holder 40 and the heater 121 are positioned such that the electric insulators 20 sandwiching the electric resistor 10 extend through the hole 41. The hole 41 has a cross section wider than the cross section of the electric insulators 20 sandwiching the electric resistor 10. Therefore, the holder 40 can hold the rigid bodies 30 without being in contact with the electric insulators 20 sandwiching the electric resistor 10. With this configuration, supposing that the holder 40 and the rigid bodies 30 are positionally displaced from each other, a situation where the electric insulators 20 sandwiching the electric resistor 10 fracture by being pulled by the holder 40 can be prevented.

The sealer 50 seals holes provided in the holder 40. Specifically, the sealer 50 at least seals the hole 41. If the holder 40 has another hole, the sealer 50 seals this hole. With this configuration, the aerosol generated from the stick substrate 150 can be prevented from leaking into a space 144 below the bottom 143 in the tubular exterior member 70. In view of the fact that electronic units, such as the power supply 111 and the controller 116, may be disposed in the space 144, this configuration can prevent a failure of the inhaler device 100.

In addition to the hole 41, the holder 40 may be provided with the aforementioned air inlet through which the air enters the internal space 141. The air inlet communicates with an external space via an airflow path that is independent of the space 144 having the electronic units disposed therein. In that case, the sealer 50 seals holes excluding the air inlet.

The sealer 50 is secured to the holder 40. For example, the sealer 50 is disposed in close contact with the holder 40 so as to seal the holes provided in the holder 40. In particular, as illustrated in FIG. 6 and FIG. 7, the sealer 50 is disposed opposite the second portions 32 of the rigid bodies 30 with the holder 40 interposed therebetween. For example, the sealer 50 is disposed in close contact with the lower surface of the holder 40. With this configuration, the space 144 below the bottom 143 can be hermetically sealed without inhibiting the holding of the rigid body 30 by the holder 40.

The sealer 50 is disposed in contact with the electric insulators 20. For example, the sealer 50 is disposed in close contact with the periphery of the electric insulators 20 sandwiching the electric resistor 10. With this configuration, the space 144 below the bottom 143 can be hermetically sealed reliably.

The sealer 50 is composed of a water repellent material. In an example, the sealer 50 is composed of silicone. With this configuration, a liquid formed as a result of condensation of the aerosol generated from the stick substrate 150 is prevented from leaking into the space 144 below the bottom 143.

### 3. Supplemental remarks

Although a preferred embodiment of the present invention has been described in detail above with reference to the appended drawings, the present invention is not limited to this example. It is apparent to a person with a common knowledge of the technical field to which the present invention belongs that various modifications and alterations are conceivable within the scope of the technical ideas defined in the claims, and it is to be understood that such modifications and alterations naturally belong to the technical scope of the present invention.

For example, although the above-described embodiment relates an example where each rigid body 30 is L-shaped so that the two rigid bodies 30 form a T-shape, the present invention is not limited to such an example. In an example, each rigid body 30 may be bent at an obtuse angle so that the two rigid bodies 30 form a Y-shape. In another example, each rigid body 30 may be curved to form a J-shape. Even when the rigid bodies 30 have any of these shapes, the rigid bodies 30 can exhibit high rigidity against a force applied in the front-direction direction, so as to prevent the heater 121 from buckling in the front-rear direction.

For example, the embodiment described above relates to an example where the boundary between the heating area 11 and the non-heating area 12 is disposed further toward the trailing end (i.e., lower side) of the heater 121 relative to the end of each rigid body 30 located toward the trailing end (i.e., lower side) of the heater 121. However, the present invention is not limited to this example. The boundary between the heating area 11 and the non-heating area 12 may be disposed at the same position as the end of each rigid body 30 located toward the trailing end (i.e., lower side) of the heater 121. Specifically, the lower end of the heating area 11 may be aligned with the lower ends of the first portions 31. Accordingly, in the portion of the heater 121 inserted into the stick substrate 150, the heating area 11 can directly heat the rigid bodies 30. Moreover, the heating area 11 does not protrude lower than the rigid bodies 30, that is, to a portion of the heater 121 not inserted into the stick substrate 150, so that transmission of heat to other structural elements, such as the power supply 111, can be prevented more reliably. Thus, a heat-induced failure of the inhaler device 100 can be prevented.

For example, the embodiment described above relates to an example where the electric resistor 10 is non-uniformly distributed in the up-down direction of the non-heating area 12 so that the heater 121 produces heat non-uniformly in the up-down direction. However, the present invention is not limited to this example. For example, the heater 121 may include a plurality of electric resistors 10 separated from each other in the up-down direction. The controller 116 may be capable of controlling the supply of electric power to each of the plurality of electric resistors 10. In that case, the controller 116 may control the supply of electric power to each of the plurality of electric resistors 10 so as to cause the heater 121 to produce heat non-uniformly in the up-down direction. With this configuration, the heater 121 can produce heat non-uniformly in the up-down direction.

For example, the embodiment described above relates to an example where the internal space 141 has a quadrangular prismatic shape, as illustrated in FIG. 6. However, the present invention is not limited to this example. The internal space 141 may have any shape, such as a cylindrical shape. Furthermore, the shape of the second portion 32 of each rigid body 30 may be adjusted to conform to the shape of the bottom surface of the container 140.

The following configurations also belong to the technical scope of the present invention.
(1) An aerosol generation system comprising:
   a power supply unit that supplies electric power; and
   a heater that heats a substrate containing an aerosol source,
   wherein the heater includes an electric resistor, a rigid body, and an electric insulator disposed between the electric resistor and the rigid body, and is inserted into the substrate, the electric resistor producing heat in accordance with the electric power supplied from the power supply unit.
(2) The aerosol generation system according to (1),
   wherein the heater includes two electric insulators, and
   wherein the electric resistor is sandwiched between the two electric insulators.
(3) The aerosol generation system according to (2),
   wherein the heater includes two rigid bodies, and
   wherein the electric resistor and the electric insulators are sandwiched between the two rigid bodies.
(4) The aerosol generation system according to (3),
   wherein, in a portion of the heater inserted into the substrate, the electric resistor is within a region sandwiched between the two electric insulators, and the two electric insulators are within a region sandwiched between the two rigid bodies.
(5) The aerosol generation system according to (4),
   wherein, in the portion of the heater inserted into the substrate, ends of the two rigid bodies not in contact with the electric insulators are joined to each other.
(6) The aerosol generation system according to (1) to (5),
   wherein the heater is formed by performing hot-pressing on the electric resistor, the electric insulator, and the rigid body.
(7) The aerosol generation system according to (1) to (6),
   wherein an end of the electric insulator located toward a trailing end of the heater is disposed further toward the trailing end of the heater relative to an end of the rigid body located toward the trailing end of the heater.
(8) The aerosol generation system according to (1) to (7),
   wherein the heater is inserted into the substrate from a leading end of the heater, and
   wherein the leading end of the heater is sharp.
(9) The aerosol generation system according to (1) to (8),
   wherein the electric resistor has a heating area disposed toward a leading end of the heater and a non-heating area disposed toward a trailing end of the heater, the heating area being an area where a calorific value per unit area is larger than or equal to a predetermined value, the non-heating area being an area where the calorific value per unit area is smaller than the predetermined value, and
   wherein a boundary between the heating area and the non-heating area is disposed further toward the trailing end of the heater relative to an end of the rigid body located toward the trailing end of the heater.
(10) The aerosol generation system according to (1) to (8),
   wherein the electric resistor has a heating area disposed toward a leading end of the heater and a non-heating area disposed toward a trailing end of the heater, the heating area being an area where a calorific value per unit area is larger than or equal to a predetermined value, the non-heating area being an area where the calorific value per unit area is smaller than the predetermined value, and
   wherein a boundary between the heating area and the non-heating area is disposed at a position identical to a position of an end of the rigid body located toward the trailing end of the heater.
(11) The aerosol generation system according to (1) to (10),
   wherein the heater produces heat non-uniformly in a direction extending from a leading end toward a trailing end of the heater.
(12) The aerosol generation system according to (11),
   wherein the electric resistor is distributed non-uniformly in the direction extending from the leading end toward the trailing end of the heater.
(13) The aerosol generation system according to (1) to (12),
   wherein the rigid body is formed of a metal plate.
(14) The aerosol generation system according to (13),
   wherein the rigid body is formed of an SUS metal plate.
(15) The aerosol generation system according to (1) to (14),
   wherein the electric insulator is composed of polyimide.
(16) The aerosol generation system according to (1) to (15),
   wherein the electric insulator has a film-like configuration.
(17) The aerosol generation system according to (1) to (16),
   wherein the electric resistor is composed of SUS.
(18) The aerosol generation system according to (1) to (17),
   wherein the aerosol generation system further comprises:
   a container that has an internal space and an opening through which the internal space communicates with an outside, and that accommodates the substrate inserted into the internal space through the opening; and
   a holder that holds the rigid body such that a leading end of the heater protrudes in a direction extending from a bottom of the container toward the opening.
(19) The aerosol generation system according to (18),
   wherein the holder holds the rigid body while being separated from the electric insulator.
(20) The aerosol generation system according to (1) to (19),
   wherein the aerosol generation system includes the substrate.

### Reference Signs List

- 100: inhaler device
- 111: power supply
- 112: sensor
- 113: notifier
- 114: memory
- 115: communicator
- 116: controller
- 121: heater
- 140: container
- 141: internal space
- 142: opening
- 143: bottom
- 150: stick substrate
- 151: substrate
- 152: inhalation port
- 10: electric resistor
- 11: heating area
- 12: non-heating area
- 20: electric insulator
- 30: rigid body
- 31: first portion
- 32: second portion
- 40: holder
- 41: hole
- 50: sealer
- 60: interior member
- 70: exterior member

## Claims

1. An aerosol generation system comprising:
a power supply unit that supplies electric power; and
a heater that heats a substrate containing an aerosol source,
wherein the heater includes an electric resistor, a rigid body, and an electric insulator disposed between the electric resistor and the rigid body, and is inserted into the substrate, the electric resistor producing heat in accordance with the electric power supplied from the power supply unit.

2. The aerosol generation system according to claim 1,
wherein the heater includes two electric insulators, and
wherein the electric resistor is sandwiched between the two electric insulators.

3. The aerosol generation system according to claim 2,
wherein the heater includes two rigid bodies, and
wherein the electric resistor and the electric insulators are sandwiched between the two rigid bodies.

4. The aerosol generation system according to claim 3,
wherein, in a portion of the heater inserted into the substrate, the electric resistor is within a region sandwiched between the two electric insulators, and the two electric insulators are within a region sandwiched between the two rigid bodies.

5. The aerosol generation system according to claim 4,
wherein, in the portion of the heater inserted into the substrate, ends of the two rigid bodies not in contact with the electric insulators are joined to each other.

6. The aerosol generation system according to any one of claims 1 to 5,
wherein the heater is formed by performing hot-pressing on the electric resistor, the electric insulator, and the rigid body.

7. The aerosol generation system according to any one of claims 1 to 6,
wherein an end of the electric insulator located toward a trailing end of the heater is disposed further toward the trailing end of the heater relative to an end of the rigid body located toward the trailing end of the heater.

8. The aerosol generation system according to any one of claims 1 to 7,
wherein the heater is inserted into the substrate from a leading end of the heater, and
wherein the leading end of the heater is sharp.

9. The aerosol generation system according to any one of claims 1 to 8,
wherein the electric resistor has a heating area disposed toward a leading end of the heater and a non-heating area disposed toward a trailing end of the heater, the heating area being an area where a calorific value per unit area is larger than or equal to a predetermined value, the non-heating area being an area where the calorific value per unit area is smaller than the predetermined value, and
wherein a boundary between the heating area and the non-heating area is disposed further toward the trailing end of the heater relative to an end of the rigid body located toward the trailing end of the heater.

10. The aerosol generation system according to any one of claims 1 to 8,
wherein the electric resistor has a heating area disposed toward a leading end of the heater and a non-heating area disposed toward a trailing end of the heater, the heating area being an area where a calorific value per unit area is larger than or equal to a predetermined value, the non-heating area being an area where the calorific value per unit area is smaller than the predetermined value, and
wherein a boundary between the heating area and the non-heating area is disposed at a position identical to a position of an end of the rigid body located toward the trailing end of the heater.

11. The aerosol generation system according to any one of claims 1 to 10,
wherein the heater produces heat non-uniformly in a direction extending from a leading end toward a trailing end of the heater.

12. The aerosol generation system according to claim 11,
wherein the electric resistor is distributed non-uniformly in the direction extending from the leading end toward the trailing end of the heater.

13. The aerosol generation system according to any one of claims 1 to 12,
wherein the rigid body is formed of a metal plate.

14. The aerosol generation system according to claim 13,
wherein the rigid body is formed of an SUS metal plate.

15. The aerosol generation system according to any one of claims 1 to 14,
wherein the electric insulator is composed of polyimide.

16. The aerosol generation system according to any one of claims 1 to 15,
wherein the electric insulator has a film-like configuration.

17. The aerosol generation system according to any one of claims 1 to 16,
wherein the electric resistor is composed of SUS.

18. The aerosol generation system according to any one of claims 1 to 17,
wherein the aerosol generation system further comprises:
a container that has an internal space and an opening through which the internal space communicates with an outside, and that accommodates the substrate inserted into the internal space through the opening; and
a holder that holds the rigid body such that a leading end of the heater protrudes in a direction extending from a bottom of the container toward the opening.

19. The aerosol generation system according to claim 18,
wherein the holder holds the rigid body while being separated from the electric insulator.

20. The aerosol generation system according to any one of claims 1 to 19,
wherein the aerosol generation system includes the substrate.
